# EUROPEAN PATENT APPLICATION

(11) **EP 4 765 818 A1**
(43) Date of publication of application: **24.06.2026**
(21) Application number: 24221719.8
(22) Date of filing: 19.12.2024
(51) Int. Cl.: H04N 19/597, H04N 19/436, H04N 19/17, G06T 9/00, H04N 19/70

(54) **ENCODING AND DECODING A REPRESENTATION OF A 3D SCENE**

(71) Applicant: Koninklijke Philips N.V., 5656 AE Eindhoven (NL)
(72) Inventor: VAREKAMP, Christiaan, Eindhoven (NL); KROON, Bart, Eindhoven (NL)
(74) Representative: Philips Intellectual Property & Standards

(57) **Abstract**

A bitstream, an encoding apparatus and method for encoding the bitstream, and a decoding apparatus and method for decoding the bitstream. The bitstream comprises encoded 3D Gaussian splat data for one or more frames. The encoded 3D Gaussian splat data comprises at least one reference set of parameters for a reference frame representing a 3D scene at a first moment in time and at least one set of decoding instructions. Each set of decoding instructions describes a transformation to be applied to one of the at least one reference set of parameters. The at least one reference set of parameters and the at least one set of decoding instructions are decoded using at least one processing unit configured to perform serial processing. The transformation described by each set of decoding instructions is applied using massively parallel processing.

## Description

### FIELD OF THE INVENTION

The invention relates to the field of representations of 3D scenes, and, in particular, to encoding and decoding 3D Gaussian splat data.

### BACKGROUND OF THE INVENTION

Six degree of freedom (6 DoF) immersive video allows a scene to be viewed from different positions and orientations. The creation of 6 DoF immersive video uses multiple cameras to capture images of a scene from different viewpoints. The captured images are then processed to generate an image at a new viewpoint.

Various approaches have been used to generate an image at a new viewpoint. For instance, images of a scene from different viewpoints may be processed to estimate a depth map for each image, and the depth maps may be used to project each point in the 3D scene to the imaging plane of a virtual camera at the new viewpoint. This method can lead to low quality images if there are inaccuracies in the depth estimation process (caused, for example, by light reflection or a lack of local variation in color).

Another technique involves the use of a neural radiance field (NeRF) algorithm to model the scene. This approach provides high quality images of scenes from new viewpoints, but is much less efficient than traditional depth estimation methods. A NeRF algorithm is trained for a specific scene using images of the scene from different viewpoints as ground truth; this process can take up to several hours, while rendering a new image using the trained NeRF algorithm typically takes up to several seconds per frame.

3D Gaussian Splatting is a new technique for representing a 3D scene, first described in B. Kerbl et al. (2023), "3D Gaussian Splatting for Real-Time Radiance Field Rendering", ACM Transactions on Graphics, 42(4): 139(1-14). In this technique, the 3D scene is represented by a set of 3D Gaussian splats, the parameters of which are optimized to generate a 3D representation of the scene. This provides high quality images that can be rendered much faster than NeRF-based methods.

### SUMMARY OF THE INVENTION

The invention is defined by the claims.

According to examples in accordance with an aspect of the invention, there is provided a method for decoding a representation of a 3D scene, the method comprising: receiving a bitstream comprising encoded 3D Gaussian splat data for one or more frames, wherein the encoded 3D Gaussian splat data comprises: at least one reference set of parameters for a reference frame representing a 3D scene at a first moment in time; and at least one set of decoding instructions, each set of decoding instructions describing a transformation to be applied to one of the at least one reference set of parameters; decoding, using at least one first processing unit, the at least one reference set of parameters and the at least one set of decoding instructions, wherein each first processing unit is configured to perform serial processing; and for each set of decoding instructions, applying, using at least one second processing unit configured to perform massively parallel processing, the transformation described by the set of decoding instructions to the respective reference set of parameters to obtain a set of Gaussian parameters for each 3D Gaussian splat in a group of 3D Gaussian splats, wherein the transformation is applied using massively parallel processing.

The invention is based on the recognition that, by encoding parameters for 3D Gaussian splats with respect to a reference set of parameters, the decoding of the encoded 3D Gaussian splat data may be split between a serial processing unit (such as a Central Processing Unit, CPU) and a massively parallel processing unit (such as a Graphical Processing Unit, GPU). The inventors have recognized that a massively parallel processing unit is particularly well-suited to applying a transformation to reference parameters to obtain Gaussian parameters for a large number of 3D Gaussian splats, as the processing for each of these 3D Gaussian splats may be performed in parallel, while a serial processing unit is more suited to decoding reference parameters and instructions for the massively parallel processing unit, as this step has a high number of unpredictable branches. Decoding the 3D Gaussian splat data in this way thus enables the Gaussian parameters for each 3D Gaussian splat to be obtained more efficiently.

In some examples, the at least one set of decoding instructions comprises at least one set of decoding instructions for a further frame representing the 3D scene at a second, different moment in time; and for each set of decoding instructions for the further frame, the step of the applying the transformation described by the set of decoding instructions comprises applying the transformation to each 3D Gaussian splat in a first group of 3D Gaussian splats in the reference frame to obtain a set of Gaussian parameters for each 3D Gaussian splat in a second group of 3D Gaussian splats in the further frame.

In other words, the set of decoding instructions for the further frame may comprise residual parameters that, when applied to 3D Gaussian splats in the reference frame, provide Gaussian parameters for 3D Gaussian splats in the further frame.

In some examples, the at least one set of decoding instructions comprises at least one set of decoding instructions for a third group of 3D Gaussian splats in the reference frame; and for each set of decoding instructions for the reference frame, the step of the applying the transformation described by the set of decoding instructions comprises applying the transformation to the respective reference set of parameters to obtain a set of Gaussian parameters for each 3D Gaussian splat in the third group.

For example, a set of reference parameters may define a reference 3D Gaussian splat in the reference frame, and the Gaussian parameters of other 3D Gaussian splats in the reference frame may be coded with respect to the reference 3D Gaussian splat.

Alternatively, a set of reference parameters may define a geometric surface such as a reference plane or other reference surface, and the Gaussian parameters of 3D Gaussian splats in the reference frame may be coded with respect to the reference plane/surface.

In some examples, the encoded 3D Gaussian splat data for each frame is provided in a plurality of data structures, each data structure corresponding to a respective group of 3D Gaussian splats, wherein, for any further frame, each data structure in the plurality of data structures for the further frame corresponds to a respective data structure in the plurality of data structures for the reference frame; any set of decoding instructions for the reference frame is provided in the same data structure as the reference set of parameters to which the transformation described by the set of decoding instructions is to be applied; and any set of decoding instructions for any further frame is provided in a data structure corresponding to the data structure containing the reference set of parameters to which the transformation described by the set of decoding instructions is to be applied.

Providing the reference set(s) of parameters and set(s) of decoding instructions in this format enables the reference set of parameters to which the transformation described by each set of decoding instructions is to be applied to be readily identified.

In some examples, the step of decoding, using at least one first processing unit, the at least one reference set of parameters and the at least one set of decoding instructions comprises, for each frame, decoding each data structure belonging to the frame using a different first processing unit.

In other words, each data structure in a frame may be decoded in parallel.

In some examples, the step of applying, using at least one second processing unit, the transformation described by each set of decoding instructions comprises, for each frame, applying the transformation described by the set of decoding instructions in each data structure using a different second processing unit.

In other words, decoding instructions for different data structures in the same frame may be applied in parallel.

In some examples, at least one data structure corresponds to a region of a 3D scene.

This allows 3D Gaussian splats representing the region of the 3D scene to be coded with respect to a reference point or a reference surface (e.g. a reference plane), and/or allows a global translation and/or rotation of the region to be defined in decoding instructions. The region of the 3D scene to which a data structure corresponds may be a region defining an object in the 3D scene.

In some examples, the method further comprises, for each frame: defining a target viewport for the frame; processing, using the at least one second processing unit, the set of Gaussian parameters for each 3D Gaussian splat belonging to the frame to render an image frame in the target viewport.

As the set of Gaussian parameters for each 3D Gaussian splat belonging to the frame is already present in the memory of the second processing unit, this allows imaging frames to be rendered more efficiently.

In some examples, any data that is transferred from the at least one second processing unit to the at least one first processing unit is transferred such that the operation of the at least one second processing unit, during performance of any step of any method described above that is carried out by the at least one second processing unit, is not blocked by the transfer.

In this way, there is no synchronization bottleneck between the processing units, improving an efficiency of the method. Either no data is transferred, or an asynchronous construct like a message queue is used to avoid blocking the second processing unit. The first processing unit does not depend on data from the second processing unit for decoding subsequent frames. Data sent for statistics, QoS monitoring or the like can be sent back to the first processing unit (or a third one) with a loose timing.

According to examples in accordance with another aspect of the invention, there is provided a method for encoding a representation of a 3D scene, the method comprising: obtaining one or more frames of a 3D scene, each frame comprising a set of 3D Gaussian splats representing the 3D scene at a respective moment in time; processing the one or more frames to determine: at least one reference set of parameters for a reference frame representing the 3D scene at a first moment in time; and at least one set of decoding instructions, each set of decoding instructions describing a transformation to be applied to one of the at least one reference set of parameters; encoding, into a bitstream, the at least one reference set of parameters and the at least one set of decoding instructions.

There is also provided a computer program product comprising computer program code means which, when executed on a computing device having a processing system, cause the processing system to perform all of the steps of any method described above.

According to examples in accordance with yet another aspect of the invention, there is provided a decoding apparatus, the decoding apparatus comprising: at least one first processing unit configured to perform serial processing, wherein the at least one first processing unit is configured to: receive a bitstream comprising encoded 3D Gaussian splat data for one or more frames, wherein the encoded 3D Gaussian splat data comprises: at least one reference set of parameters for a reference frame representing a 3D scene at a first moment in time; and at least one set of decoding instructions, each set of decoding instructions describing a transformation to be applied to one of the at least one reference set of parameters; and decode the at least one reference set of parameters and the at least one set of decoding instructions; and at least one second processing unit configured to perform massively parallel processing, wherein the at least one second processing unit is configured to: receive, from the at least one first processing unit, the decoded at least one reference set of parameters and the decoded at least one set of decoding instructions; and for each set of decoding instructions, apply the transformation described by the set of decoding instructions to the respective reference set of parameters to obtain a set of Gaussian parameters for each 3D Gaussian splat in a group of 3D Gaussian splats, wherein the transformation is applied using massively parallel processing.

In some examples, the at least one first processing unit and the at least one second processing unit are provided in a single silicon-on-chip device.

According to examples in accordance with yet another aspect of the invention, there is provided an encoding apparatus, the encoding apparatus being configured to: obtain one or more frames of a 3D scene, each frame comprising a set of 3D Gaussian splats representing the 3D scene at a respective moment in time; process the one or more frames to determine: at least one reference set of parameters for a reference frame representing a 3D scene at a first moment in time; and at least one set of decoding instructions, each set of decoding instructions describing a transformation to be applied to one of the at least one reference set of parameters; encode, into a bitstream, the at least one reference set of parameters and the at least one set of decoding instructions.

According to examples in accordance with yet another aspect of the invention, there is provided a bitstream comprising encoded 3D Gaussian splat data for one or more frames, wherein the encoded 3D Gaussian splat data comprises: at least one reference set of parameters for a reference frame representing a 3D scene at a first moment in time; and at least one set of decoding instructions, each set of decoding instructions describing a transformation to be applied to one of the at least one reference set of parameters.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 illustrates a method for encoding a representation of a 3D scene, according to an embodiment of the invention;
Fig. 2 illustrates an example sequence of frames;
Fig. 3 illustrates an example of dividing an overall volume enclosing a set of 3D Gaussian splats into a plurality of sub-volumes;
Fig. 4 illustrates how the 3D Gaussian splats may be assigned to a plurality of data structures;
Fig. 5 illustrates how a set of decoding instructions for a data structure in a further frame may be determined;
Fig. 6 illustrates a method for decoding a representation of a 3D scene, according to an embodiment of the invention; and
Fig. 7 illustrates a pipeline for transmitting a representation of a 3D scene.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a bitstream, an encoding apparatus and method for encoding the bitstream, and a decoding apparatus and method for decoding the bitstream. The bitstream comprises encoded 3D Gaussian splat data for one or more frames. The encoded 3D Gaussian splat data comprises at least one reference set of parameters for a reference frame representing a 3D scene at a first moment in time and at least one set of decoding instructions. Each set of decoding instructions describes a transformation to be applied to one of the at least one reference set of parameters. The at least one reference set of parameters and the at least one set of decoding instructions are decoded using at least one processing unit configured to perform serial processing. The transformation described by each set of decoding instructions is applied using massively parallel processing.

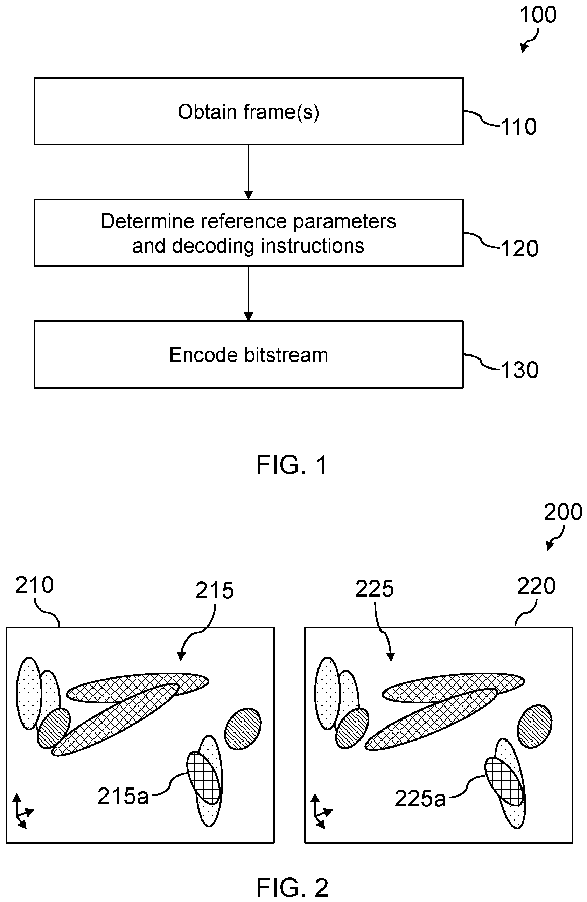

Fig. 1 illustrates a method 100 for encoding a representation of a 3D scene, according to an embodiment of the invention.

The method begins at step 110, at which one or more frames of a 3D scene are obtained. Each of the one or more frames comprises a respective set of 3D Gaussian splats representing the 3D scene at a respective moment in time. A 3D Gaussian splat representation of a 3D scene may be considered as a point cloud representation of the scene for which each point is richly described (i.e. has multiple attributes describing the shape and color).

Each set of 3D Gaussian splats may have been generated by processing a respective set of image frames of the 3D scene, each set of image frames comprising a plurality of views of the 3D scene at a particular moment in time. The generation of a set of 3D Gaussian splats from a plurality of views of a 3D scene is, for example, described in: B. Kerbl et al. (2023), "3D Gaussian Splatting for Real-Time Radiance Field Rendering", ACM Transactions on Graphics, 42(4):139(1-14); and Wu et al. (2024), "Recent advances in 3D Gaussian splatting", Computational Visual Media, 10(4):613-642. Any suitable technique may be used to generate each set of 3D Gaussian splats, including neural-based methods. For instance, the color of each 3D Gaussian splat may be described using tristimulus values, spectral harmonics or a neural representation.

In some examples, where more than one frame is obtained, each frame may be obtained and processed in real-time or close to real-time. In other words, as soon as each set of image frames of a scene is acquired (by a plurality of cameras), the set of image frames is processed to generate a set of 3D Gaussian splats, and as soon as the set of 3D Gaussian splats is generated, a frame containing the set of 3D Gaussian splats is obtained and processed by performing the method 100.

Each frame contains a set of parameters for each 3D Gaussian splat in the set of 3D Gaussian splats for the frame. The sets of parameters in each frame are provided in an arbitrary order. Thus, in examples in which the one or more frames comprise more than one frame, a 3D Gaussian splat for a point in the 3D scene does not necessarily have the same position in a first frame as the position in a second frame of a 3D Gaussian splat for the same point in the 3D scene at a different time.

The set of parameters for each 3D Gaussian splat defines the 3D Gaussian splat. The parameters defining a set of 3D Gaussian splats may comprise, for each 3D Gaussian splat in the set, a position (i.e. a position of the center of the 3D Gaussian splat), an orientation, a scale, an opacity, and a color.

In the context of the present disclosure, a "frame" contains a list of parameters defining a set of 3D Gaussian splats representing a 3D scene at a particular moment in time, while an "image frame" contains imaging data defining an image (e.g. an image captured by a camera or an image rendered by rasterizing at least some of a set of 3D Gaussian splats representing a 3D scene at a particular moment in time).

At step 120, the one or more frames are processed to determine at least one reference set of parameters and at least one set of decoding instructions.

At step 130, the at least one reference set of parameters and the at least one set of decoding instructions are encoded into a bitstream.

The at least one reference set of parameters comprises at least one set of parameters for a reference frame representing the 3D scene at a first moment in time. Each set of decoding instructions describes a transformation to be applied to one of the at least one reference set of parameters. The at least one set of reference parameters and the at least one set of decoding instructions are determined such that the at least one set of reference parameters and the at least one set of decoding instructions together provide information enabling the set of parameters for each 3D Gaussian splat in each frame to be reconstructed. Encoding the 3D Gaussian splat data in this way enables decoding of the bitstream to be shared between at least one first processing unit configured to perform serial processing and at least one second processing unit configured to perform massively parallel processing, as described below.

In examples in which the one or more frames consists of a single frame, the single frame will necessarily be the reference frame. In examples in which the one or more frames comprises more than one frame, the chronologically earliest frame may be identified as the reference frame (if using a low delay encoder configuration, for instance when processing the frames in real-time or close to real-time, e.g. for telecommunications applications); however, this is not necessarily the case, and (if using a random access encoder configuration) any other frame may be identified as the reference, for instance, a frame having a center position (with respect to time) in a sequence of frames or a final frame in a sequence. In some examples (for instance, with longer sequences of frames), more than one frame may be identified as a reference frame.

Various techniques are envisaged for determining the at least one reference set of parameters and at least one set of decoding instructions. How the at least one reference set of parameters and at least one set of decoding instructions may depend on a desired bit rate, a desired image quality (of image frames rendered using the at least one reference set of parameters and at least one set of decoding instructions), and a complexity of the 3D scene. In some examples, a rate distortion optimization process may be performed to determine the desired bit rate; the rate distortion optimization process may comprise encoding bitstreams having different bit rates, each bitstream being encoded using the method 100, and decoding each bitstream using the method 600 described below. Alternatively, a suitable proxy, for instance, based on the average bits per pixel for each Gaussian parameter and a quantization parameter for each Gaussian parameter, may be used to estimate the desired bit rate.

In some examples in which the one or more frames comprises more than one frame (i.e. the one or more frames comprises the reference frame and one or more further frames), the set of Gaussian parameters for each 3D Gaussian splat in the reference frame may be a reference set of parameters; in other words, the set of Gaussian parameters for each 3D Gaussian splat in the reference frame may be encoded into the bitstream. For each further frame, a set of decoding instructions may be determined, each set of decoding instructions describing a transformation to be applied to each 3D Gaussian splat in the reference frame to obtain the set of Gaussian parameters for each 3D Gaussian in the respective further frame.

The transformation described in the set of decoding instructions for each further frame may comprise a transformation (e.g. a translation and/or rotation) that is applied to the set of 3D Gaussian splats in the reference frame as a whole and/or a set of residual parameters for each 3D Gaussian splat in the respective further frame.

Where the one or more frames comprises the reference frame and one or more further frames, the set of decoding instructions may describe a transformation to be applied to a previously decoded frame. In other words, the term "reference frame" as used herein refers to an independently coded frame (also known as an independent random access point, IRAP, frame, I-frame or intra frame), while the term "further frame" as used herein refers to a frame that is coded with reference to at least one other frame. A further frame may also be known as a dependent frame, a non-IRAP frame, a P-frame or an inter frame. Each further frame is encoded such that each further frame is dependent on the reference frame; some further frames may also depend on another further frame. For instance, the set of decoding instructions for a first (in decoding order) further frame may define a difference between the set of 3D Gaussian splats in the reference frame and the set of 3D Gaussian splats in the first (in decoding order) further frame, while the set of decoding instructions for a second (in decoding order) further frame may define a difference between the set of 3D Gaussian splats in the first further frame and the set of 3D Gaussian splats in the second (in decoding order) further frame. Thus, the set of 3D Gaussian splats in the second (in decoding order)further frame may be reconstructed by applying both the transformation described in the set of decoding instructions for the first (in decoding order) further frame and the transformation described in the set of decoding instructions for the second (in decoding order) further frame. In some examples in which more than one reference frame is identified, a further frame may be dependent on more than one reference frame.

Where the transformation described in a set of decoding instructions comprises a set of residual parameters for each 3D Gaussian splat in a further frame, the set of residual parameters for each 3D Gaussian splat may be defined with respect to the set of parameters for a 3D Gaussian splat in the preceding frame having a same position in the frame. Thus, in order to encode the sets of residual parameters more efficiently, the 3D Gaussian splats in each further frame may be reordered such that each 3D Gaussian splat in each further frame has the same position as a corresponding 3D Gaussian splat in the reference frame. A 3D Gaussian splat in each further frame may be identified as corresponding to a 3D Gaussian splat in the reference frame based at least on the positions of the 3D Gaussian splats. For instance, the 3D Gaussian splat in a further frame having a closest position to the position of a 3D Gaussian splat in the reference frame may be identified as corresponding to the 3D Gaussian splat in the reference frame if the distance between the closest 3D Gaussian splat in the further frame and the 3D Gaussian splat in the reference frame is less than a predetermined distance and/or if the color of the closest 3D Gaussian splat in the further frame is sufficiently similar to the color of the 3D Gaussian splat in the reference frame.

This may be understood more clearly with reference to Fig. 2, which illustrates an example sequence of frames 200, comprising a reference frame 210 and a further frame 220. The reference frame comprises a first set of 3D Gaussian splats 215, while the further frame comprises a second set of 3D Gaussian splats 225, representing the same 3D scene as the first set at a different moment in time.

In the example shown in Fig. 2, the second set of 3D Gaussian splats 225 comprises the same number of 3D Gaussian splats as the first set of 3D Gaussian splats, and each 3D Gaussian splat in the first set 215 has a corresponding 3D Gaussian splat in the second set. Some 3D Gaussian splats in the second set have a slightly different position and/or orientation to the corresponding 3D Gaussian splat in the first set, due to movement and/or rotation of an object in the 3D scene represented by the 3D Gaussian splat. Corresponding 3D Gaussian splats have the same color (represented by different patterns in Fig. 2). For instance, 3D Gaussian splat 215a in the reference frame 210 corresponds to 3D Gaussian splat 225a in the further frame 220. Thus, before determining the set of decoding instructions for the further frame 220, the 3D Gaussian splats in the further frame 220 may be reordered such that the 3D Gaussian splat 225a has a same position in the further frame as the position of the corresponding 3D Gaussian splat 215a in the reference frame 210.

The skilled person will appreciate that, in some cases, a further frame may have a different number of 3D Gaussian splats to the reference frame. A further frame may include one or more 3D Gaussian splats that do not correspond to any 3D Gaussian splat in the reference frame (e.g. due to an object appearing in the 3D scene), and/or the reference frame may include one or more 3D Gaussian splats that do not correspond to any 3D Gaussian splat in a further frame (e.g. due to an object leaving the 3D scene). Where a further frame has more 3D Gaussian splats than the reference frame, the set of decoding instructions may include, for any 3D Gaussian splat that does not correspond to a 3D Gaussian splat in the reference frame, an instruction to copy a 3D Gaussian splat (e.g. a most similar 3D Gaussian splat) in the reference frame and a set of residual parameters to be applied to the copied 3D Gaussian splat to obtain the set of Gaussian parameters for the 3D Gaussian splat in the further frame.

In some examples (including both examples in which the one or more frames consists of a single frame and examples in which the one or more frames comprises more than one frame), one or more 3D Gaussian splats in the reference frame may be identified as reference splats, and a set of decoding instructions for the reference frame may be determined for each reference splat. The set of Gaussian parameters for each reference splat is thus a reference set of parameters, and is encoded into the bitstream along with each set of decoding instructions for the reference frame. Each set of decoding instructions for the reference frame describes a transformation that, when applied to the set of Gaussian parameters for the respective reference splat, defines the set of Gaussian parameters for each 3D Gaussian splat in a group of 3D Gaussian splats in the reference frame. In some examples, the group of 3D Gaussian splats in the reference frame may contain all 3D Gaussian splats in the reference frame except one reference splat; in other words, a single 3D Gaussian splat in the reference frame may be identified as a reference splat, and all remaining 3D Gaussian splats in the reference frame may be encoded using a set of decoding instructions (i.e. a single set of decoding instructions may be determined for the reference frame, describing a transformation to be applied to the Gaussian parameters for the reference splat to obtain a set of Gaussian parameters for each 3D Gaussian splat in the reference frame). In other examples, the 3D Gaussian splats in the reference frame may be divided into a plurality of groups, as described below in more detail, a reference splat may be identified for each group, and a set of decoding instructions may be determined for each group.

A set of decoding instructions for the reference frame that describes a transformation to be applied to the set of Gaussian parameters for a reference splat may, for example, comprise a set of residual parameters for each 3D Gaussian splat in the group to which the set of decoding instructions relates. The set of residual parameters for each 3D Gaussian splat in the group defines a difference between the set of Gaussian parameters for the 3D Gaussian splat and the set of Gaussian parameters for the reference splat to which the set of decoding instructions is to be applied.

In some examples, one or more reference surfaces (e.g. reference planes, reference spheres, etc.) may be determined for the reference frame, and a set of reference parameters defining the reference surface may be determined for each reference surface. A set of decoding instructions for the reference frame may then be determined for each reference surface, each set of decoding instructions for the reference frame describing a transformation that, when applied to the set of parameters for the respective reference surface, defines the set of Gaussian parameters for each 3D Gaussian splat in a group of 3D Gaussian splats in the reference frame. In some examples, the group of 3D Gaussian splats may contain all 3D Gaussian splats in the reference frame.

A set of decoding instructions for the reference frame that describes a transformation to be applied to a set of parameters defining a reference surface may, for example, comprise a set of residual parameters for each 3D Gaussian splat in the group to which the set of decoding instructions relates. The set of residual parameters for each 3D Gaussian splat in the group defines a difference between the set of Gaussian parameters for the 3D Gaussian splat and the set of parameters defining the reference surface to which the set of decoding instructions is to be applied. For instance, the set of residual parameters for each 3D Gaussian splat in the group may define a position of the 3D Gaussian splat relative to the reference surface. The set of residual parameters for each 3D Gaussian splat in the group may additionally or alternatively define a color of the 3D Gaussian splat relative to a color of the reference surface (as a region will often have a similar color throughout the region). The set of residual parameters for each 3D Gaussian splat in the group may additionally or alternatively define an orientation and/or scale of the 3D Gaussian splat (for instance, if a group of 3D Gaussian splats together represent a planar surface, two axes of each Gaussian splat may be aligned with or close to being aligned with the planar surface, and the third axis may have a small scale factor).

In some examples, a combination of one or more reference splats and one or more reference surfaces may be determined for the reference frame, and some 3D Gaussian splats in the reference frame may be encoded using a set of decoding instructions describing a transformation to be applied to a set of Gaussian parameters for a reference splat, while other 3D Gaussian splats in the reference frame may be encoded using a set of decoding instructions describing a transformation to be applied to a set of parameters defining a reference surface.

In some examples in which the one or more frames comprises more than one frame, sets of decoding instructions may be determined (and encoded into the bitstream) both for the reference frame and for each further frame.

In some examples, the encoded Gaussian splat data for each frame may be provided in a plurality of data structures, each data structure corresponding to a respective group of 3D Gaussian splats. The step of determining at least one reference set of parameters and at least one set of decoding instructions may comprise defining a first plurality of data structures for the reference frame and a number of entries in each data structure in the first plurality. The number of data structures in the first plurality may depend on a desired complexity. In some examples, a loss term may be used to determine a reduction in bit rate provided by a number of data structures. The number of data structures in the first plurality may be defined as the lowest number of data structures for which the difference in the reduction in bit rate (compared with having one fewer data structures) falls below a predetermined threshold.

Each 3D Gaussian splat in the reference frame may be assigned to one of the data structures in the first plurality. Various techniques for defining the first plurality of data structures and assigning each 3D Gaussian splat in the reference frame to one of the data structures in the first plurality are envisaged.

For instance, the assignment of the 3D Gaussian splats in the reference frame to the data structures in the first plurality may be arbitrary, in which case, the first plurality of data structures may be defined by defining a number of data structures and a number of data entries in each data structure such that the total number of data entries is at least equal to a required total number of data entries. The 3D Gaussian splats in the reference frame may then be arbitrarily assigned to the data structures in the first plurality (e.g. the 3D Gaussian splats may be divided equally among the data structures). In some examples, the 3D Gaussian splats may be assigned to data structures according to size (e.g. such that the largest 3D Gaussian splats are in one data structure and the smallest 3D Gaussian splats are in another data structure).

In examples in which the one or more frames consists of a single frame (the reference frame), the total number of data entries may be equal to the number of 3D Gaussian splats in the reference frame. In examples in which the one or more frames comprises more than one frame, the total number of data entries in the first plurality of data structures may be greater than the number of 3D Gaussian splats in the reference frame, as the number of data entries in each data structure and the number of data structures is the same in each further frame, as described in more detail below. The required total number of data entries may be equal to the number of 3D Gaussian splats in the set of 3D Gaussian splats in the frame having the greatest number of 3D Gaussian splats, if this information is available when defining the first plurality of data structures. If this information is not available when defining the first plurality of data structures, the required total number of data entries may depend on a desired bit rate, a desired complexity and/or a desired image quality (of images generated by decoding a bitstream encoded using the method 100).

In some examples, at least one data structure in the first plurality may correspond to a region of the 3D scene. Thus, defining the first plurality of data structures may comprise defining, for at least one data structure, a correspondence between the data structure and a region of the 3D scene.

For instance, the first plurality of data structures may be defined by first defining an overall volume enclosing the 3D Gaussian splats in the reference frame. The overall volume may then be divided into a plurality of sub-volumes, and a data structure may be defined for each sub-volume. In other words, the overall volume may be divided into a plurality of sub-volumes such that the number of sub-volumes corresponds to a desired number of data structures. Each 3D Gaussian splat in the reference frame may then be assigned to the data structure corresponding to the sub-volume in which the center of the 3D Gaussian splat is positioned.

Any suitable technique may be used to define an overall volume enclosing the 3D Gaussian splats in the reference frame. The defined overall volume may be finite or infinite, as appropriate (i.e. the overall volume may be bound in zero, one, two or three dimensions). For instance, the overall volume may be defined by zero or more constructive solid geometry (CSG) primitives (e.g. using half-spaces).

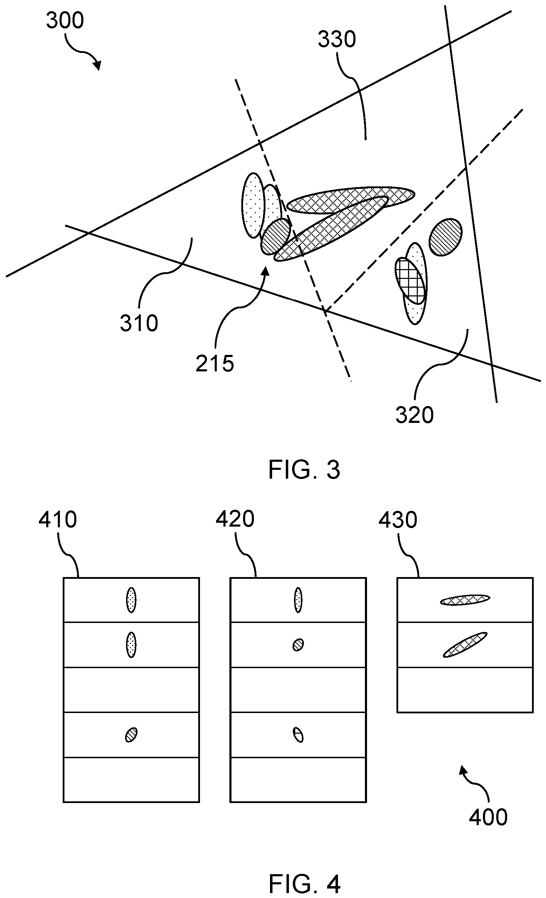

Fig. 3 illustrates an example of dividing an overall volume enclosing a set of 3D Gaussian splats into a plurality of sub-volumes. An overall volume 300 is defined for the first set of 3D Gaussian splats 215 belonging to the reference frame 210 in the example of Fig. 2. The overall volume 300 is defined by the intersection of three half-spaces, and is unbounded in the direction perpendicular to the page (extending to the horizon). The overall volume 300 has been divided into three Voronoi cells 310, 320 and 330. The Voronoi cells 310, 320 and 330 have been defined by dividing the first set of 3D Gaussian splats 215 into groups of neighboring 3D Gaussian splats. For each group of neighboring 3D Gaussian splats, a Voronoi cell is defined such that, for any point in the Voronoi cell, the closest 3D Gaussian splat (according to the center position of the 3D Gaussian splat) is in the group of neighboring 3D Gaussian splats for the Voronoi cell.

Fig. 4 illustrates how the 3D Gaussian splats in the first set 215 are assigned to a first plurality of data structures 400, each data structure in the first plurality corresponding to a respective sub-volumes 310, 320 and 330. 3D Gaussian splats having their center position in the first sub-volume 310 are assigned to a first data structure 410; 3D Gaussian splats having their center position in the second sub-volume 320 are assigned to a second data structure 420; and 3D Gaussian splats having their center position in the third sub-volume 330 are assigned to a third data structure 430. Each data structure 410, 420, 430 has a higher number of data entries than the number of 3D Gaussian splats assigned to the respective data structure, so each data structure has at least one empty data entry. This allows a data structure having the same number of data entries to be used for a further frame for which a greater number of 3D Gaussian splats are in the same sub-volume.

Defining an overall volume and dividing the overall volume into sub-volumes is only one example of how to define a plurality of data structures such that at least one data structure corresponds to a region in the 3D scene. In some examples, at least one data structure in the first plurality may correspond to a region defining an object in the 3D scene. A region defining an object in the 3D scene may be identified using any suitable computer vision technique (e.g. using an object detection algorithm, an object recognition algorithm, or a segmentation algorithm), applied to the image frames used to generate the first set of 3D Gaussian splats, if these are available, or to a set of image frames synthesized using the first set of 3D Gaussian splats. Alternatively, a region defining an object in the 3D scene may be identified using depth information for the 3D scene.

In some examples, one or more of the data structures in the first plurality may correspond to a region defined by a reference plane or another reference surface (e.g. a reference sphere). For instance, if the first set of 3D Gaussian splats includes a number of 3D Gaussian splats that fit a plane (e.g. due to the presence of an object having a flat surface, such as a table, monitor, ceiling, wall, door, etc.), a data structure corresponding to a region defined by the plane may be defined, and 3D Gaussian splats that fit the plane may be assigned to the data structure.

Having defined the first plurality of data structures and assigned each 3D Gaussian splat in the reference frame to a data structure, at least one reference set of parameters may be added to each data structure. In examples in which the set of Gaussian parameters for each 3D Gaussian splat in the reference frame is a reference set of parameters, the set of Gaussian parameters for each 3D Gaussian splat in the reference frame is added to the data structure to which the 3D Gaussian splat is assigned.

In examples in which at least one set of decoding instructions is determined for the reference frame, for at least one data structure, a reference splat or reference surface may be identified for the data structure, and a set of decoding instructions describing a transformation to be applied to the set of parameters for the reference splat or reference surface. A reference splat may be identified by identifying one of the 3D Gaussian splats assigned to the data structure as the reference splat for the data structure. A reference surface may be identified for any data structure corresponding to a region defined by a reference surface. Thus, a data structure for the reference frame may comprise: a set of Gaussian parameters for a reference splat and a set of decoding instructions describing a transformation that, when applied to the set of Gaussian parameters for the reference splat, defines the set of Gaussian parameters for each other 3D Gaussian splat assigned to the data structure; or a set of parameters defining a reference surface and a set of decoding instructions describing a transformation that, when applied to the set of parameters defining the reference surface, defines the set of Gaussian parameters for each 3D Gaussian splat assigned to the data structure. In other words, each set of decoding instructions for the reference frame is provided in the same data structure as the reference set of parameters to which the transformation described by the set of decoding instructions is to be applied.

In examples in which the one or more frames comprises more than one frame, a respective further plurality of data structures may be defined for each further frame. Each further plurality of data structures may be defined such that each data structure in the further plurality corresponds to a respective data structure in the first plurality, and such that corresponding data structures have the same number of data entries. In other words, for each data structure in the first plurality, a corresponding data structure having the same number of data entries is defined in the further plurality.

For instance, if the first plurality of data structures comprises a first data structure having a first number of data entries and a second data structure having a second number of data entries, a further plurality of data structures may be defined such that the further plurality of data structures comprises a third data structure, corresponding to the first data structure and having the first number of data entries, and a fourth data structure, corresponding to the second data structure and having the second number of data entries.

How the data structures in each further plurality correspond to the data structures in the first plurality may depend on how the first plurality of data structures were defined and/or how the 3D Gaussian splats in the reference frame were assigned to the data structures in the first plurality. For example, if the assignment of the 3D Gaussian splats to the data structures in the first plurality was arbitrary, for each data structure in the first plurality, a data structure having the same number of data entries may be defined as the corresponding data structure in the further plurality; this then defines how the 3D Gaussian splats in the further frame are assigned to the data structures in the further plurality, as described below. For any data structure in the first plurality that corresponds to a region of the 3D scene, the corresponding data structure in the further plurality corresponds to the same region of the 3D scene (or substantially the same region; in some examples, the boundary of a region of the 3D scene corresponding to a data structure may be slightly different for the data structure in the further plurality). It is to be understood that a "same region" of the 3D scene, in the case of a region defining an object in the scene, is a region defining the same object in the scene at the moment in time to which the further frame corresponds, rather than a region of space in the 3D scene occupied by the object at the first moment in time to which the reference frame corresponds (although there may be at least some overlap with the region of space in the 3D scene occupied by the object at the first moment in time).

For each further frame, each 3D Gaussian splat in the further frame may be assigned to one of the data structures in the respective further plurality. Any 3D Gaussian splat in the further frame that corresponds to a 3D Gaussian splat in the reference frame may be assigned to the data structure in the further plurality that corresponds to the data structure in the first plurality to which the corresponding 3D Gaussian splat belongs. A 3D Gaussian splat in a further frame may be identified as corresponding to a 3D Gaussian splat in the reference frame based at least on the positions of the 3D Gaussian splats (e.g. based on position and color), as described above. In examples in which at least one data structure corresponds to a region defining an object in the 3D scene, a 3D Gaussian splat in a further frame may only be identified as corresponding to a 3D Gaussian splat in the reference frame that is assigned to a data structure corresponding to a region defining an object if the 3D Gaussian splat in the further frame is identified as belonging to the same object. Corresponding 3D Gaussian splats may be assigned to corresponding data entries in the corresponding data structures.

A set of decoding instructions may be determined for and added to each data structure for each further frame. The set of decoding instructions in each data structure in each further frame is a set of decoding instructions describing a transformation that, when applied to a reference set of parameters in the corresponding data structure in the reference frame, defines the set of Gaussian parameters for each 3D Gaussian splat assigned to the data structure. In other words, each set of decoding instructions for each further frame is provided in a data structure corresponding to the data structure containing the reference set of parameters to which the transformation described by the set of decoding instructions is to be applied.

The set of decoding instructions in each data structure for each further frame may describe a transformation (e.g. a translation and/or rotation) that is applied to the 3D Gaussian splats in the corresponding data structure in the reference frame as a whole and/or a set of residual parameters for each 3D Gaussian splat in the data structure, where the set of residual parameters defines a difference between the 3D Gaussian splats in the corresponding data structure in the reference frame and the 3D Gaussian splats in the data structure. A transformation to be applied to the 3D Gaussian splats in a data structure as a whole may be used where this enables the set of Gaussian parameters for each 3D Gaussian splat in the data structure to be encoded more efficiently (for example, when the data structure corresponds to a region defining an object which has moved between the reference frame and the further frame).

In some examples, a set of decoding instructions for a further frame may instruct a decoder to compute at least one vector code book based on the reference frame (and optionally on one or more further frames that are to be decoded before the further frame). For instance, a single vector code book may provide all Gaussian parameters, or different vector code books may be used for different Gaussian parameters. One or more parameters for each 3D Gaussian splat described by the set of decoding instructions is represented by an index in the vector code book. A set of residual parameters may additionally be provided.

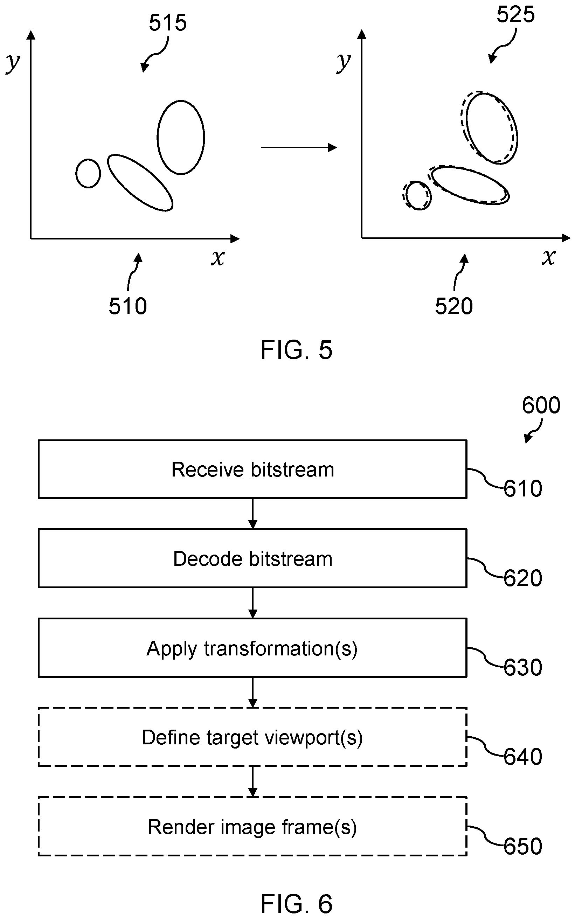

Each vector code book may, for example, be determined using K-means algorithm; each reference splat to which the set of decoding instructions relates may be mapped to a vector by concatenating the set of Gaussian parameters for the reference splat, K clusters may be initialized, and each vector may be assigned to one of the K clusters. The value of K may be predefined (and thus known to a decoding apparatus receiving the bitstream), either as a fixed value or as a predefined equation (for instance, the value of K may be a fractional power of the number of reference splats rounded to an integer of at least two), included in the set of decoding instructions, or transmitted separately to the set of decoding instructions in the bitstream. Fig. 5 illustrates how a set of decoding instructions for a data structure in a further frame may be determined. Fig. 5 shows a first group of 3D Gaussian splats 515 in a reference frame 510, and a second group of 3D Gaussian splats 525 in a further frame 520 (shown in solid lines). The 3D Gaussian splats in the first group are assigned to a data structure in the first plurality, and the 3D Gaussian splats in the second group are assigned to a corresponding data structure in a further plurality.

Each 3D Gaussian splat in the second group 525 corresponds to a respective 3D Gaussian splat in the first group 515, with the corresponding splats having the same shape as one another but a slightly different position and orientation. The 3D Gaussian splats in the second group may be obtained by first transforming (by rotating and translating) the first group as a whole, and then applying residual parameters to the 3D Gaussian splats. The dashed lines illustrate the first group of 3D Gaussian splats after the group as a whole has been rotated and translated. By applying the same transformation to the entire group, the changes in position and orientation that need to be applied to each individual 3D Gaussian splat to achieve the position and orientation of the corresponding 3D Gaussian splat in the second group is much smaller, allowing the information to be encoded more efficiently. The set of decoding instructions for the second group may therefore describe the transformation for the first group as a whole (e.g. in the form of a transformation matrix) and a set of residual parameters defining the differences between each 3D Gaussian splat in the first group after the transformation is applied to the whole group and the corresponding 3D Gaussian splat in the second group.

Further details regarding techniques for encoding 3D Gaussian splat data using a plurality of data structures for each frame are described in Kroon, Bart and Varekamp, Christiaan (2024), "Encoding and Decoding a Representation of a 3D Scene", European Patent Application No. 24212096.2.

The method 100 may further comprise a step of encoding metadata into the bitstream. For instance, the metadata may comprise information identifying each reference set of parameters (alternatively, this information may be made available to a decoding apparatus by the ordering of the encoded Gaussian splat data within the bitstream).

In examples in which the encoded Gaussian splat data for each frame is provided in a plurality of data structures, the metadata may comprise the number of data structures per frame and/or the number of data entries in each data structure (alternatively, one or both of these may be provided by external means). The metadata may indicate, for each data structure in the second plurality, which data structure in the first plurality is the corresponding data structure (alternatively, this information may be made available to a decoding apparatus by the ordering of the data structures within the bitstream). Where at least one data structure corresponds to a region of the 3D scene, the metadata may comprise information defining the region of the 3D scene that corresponds to the at least one data structure. For instance, if an overall volume enclosing the set of 3D Gaussian splats has been divided into sub-volumes, the metadata may comprise information defining the overall volume and how the overall volume was divided into sub-volumes. If at least one data structure corresponds to a region defining an object in the 3D scene, information identifying the object to which the data structure corresponds may be encoded into the bitstream. Information identifying the object to which the data structure corresponds may include at least a position of the object within the 3D scene. In some examples, the information identifying the object may also include a semantic label for the object (e.g. identifying a type of object) and/or an object ID for the object (e.g. in order to distinguish between different instances of a same type of object).

Fig. 6 illustrates a method 600 for decoding a representation of a 3D scene, according to an embodiment of the invention.

The method 600 begins at step 610, at which a bitstream comprising encoded 3D Gaussian splat data for one or more frames is received. The encoded 3D Gaussian splat data comprises at least one reference set of parameters for a reference frame representing a 3D scene at a first moment in time, and at least one set of decoding instructions, each set of decoding instructions describing a transformation to be applied to one of the at least one reference set of parameters. In some examples, the bitstream may further comprise metadata, as described above. The bitstream may have been encoded using the method 100 described above with reference to Fig. 1.

At step 620, the at least one reference set of parameters and the at least one set of decoding instructions are decoded using at least one first processing unit. Each first processing unit is configured to perform serial processing (also known as linear processing). For instance, each first processing unit may be a Central Processing Unit (CPU). The step of decoding the at least one reference set of parameters and the at least one set of decoding instructions is well-suited to serial processing, as this step typically involves a high number of branches.

In examples in which the encoded splat data for each frame is provided in a plurality of data structures, prior to decoding the at least one reference set of parameters and the at least one set of decoding instructions, the number of data structures per frame and the number of data entries in each data structure may be determined using the at least one first processing unit. Where the number of data structures per frame is encoded as metadata in the bitstream, the number of data structures per frame may be determined by decoding the metadata. Alternatively, the number of data structures per frame may be available by external means. Similarly, where the number of data entries in each data structure is encoded as metadata in the bitstream, the number of data entries in each data structure may be determined by decoding the metadata. Alternatively, the number of data entries in each data structure may be available by external means.

In some examples in which the encoded splat data for each frame is provided in a plurality of data structures, each data structure belonging to the same frame may be decoded using a different first processing unit. In other words, the reference set of parameters and/or set of decoding instructions in a first data structure in a frame may be decoded by one first processing unit, while the reference set of parameters and/or set of decoding instructions in a second data structure in the same frame may be decoded by another first processing unit. This enables the data structures in a frame to be decoded in parallel, thus improving an efficiency of the decoding process.

At step 630, for each set of decoding instructions, the transformation described by the set of decoding instructions is applied to the respective reference set of parameters, using at least one second processing unit configured to perform massively parallel processing, to obtain a set of Gaussian parameters for each 3D Gaussian splat in a group of 3D Gaussian splats. The transformation for a set of decoding instructions is applied using massively parallel processing. In massively parallel processing, the same program is run on a large number of threads in parallel; by contrast, a serial processing unit with multiple cores is able to run different programs on different cores.

In this way, the set of Gaussian parameters for each 3D Gaussian splat in each frame is obtained. Once obtained, the set of Gaussian parameters for each 3D Gaussian splat in a frame may be stored in the memory of the at least one second processing unit, for example, in order to use the 3D Gaussian splats to render an image frame and/or to apply one or more transformations to the 3D Gaussian splats to obtain the set of Gaussian parameters for each 3D Gaussian splat in a subsequent frame. The memory of the at least one second processing unit for storing the set of Gaussian parameters for each 3D Gaussian splat in a frame may be pre-allocated. For instance, where the encoded splat data for each frame is provided in a plurality of data structures, the number of data structures per frame and the number of data entries in each data structure may be used to pre-allocate memory.

Each second processing unit may, for example, be a Graphical Processing Unit (GPU) or a Tensor Processing Unit (TPU). The step of applying a transformation described by a set of decoding instructions is well-suited to massively parallel processing, as the transformation may be applied independently for each 3D Gaussian splat in the group to which the set of decoding instructions relates.

As described above, in some examples, the at least one set of decoding instructions may comprise at least one set of decoding instructions for a further frame representing the 3D scene at a different moment in time to the reference frame. For each set of decoding instructions for each further frame, the transformation described by the set of decoding instructions is applied, using massively parallel processing, to each 3D Gaussian splat in a first group of 3D Gaussian splats in the reference frame to obtain a set of Gaussian parameters for each 3D Gaussian splat in a second group of 3D Gaussian splats in the further frame. The first group of 3D Gaussian splats may contain all 3D Gaussian splats in the reference frame and the second group of 3D Gaussian splats may contain all 3D Gaussian splats in the further frame. Alternatively, the first group of 3D Gaussian splats may contain all 3D Gaussian splats in the reference frame assigned to a particular data structure, and the second group of 3D Gaussian splats may contain all 3D Gaussian splats assigned to the corresponding data structure in the further frame.

As described above, in some examples, the at least one set of decoding instructions may comprise at least one set of decoding instructions for the reference frame. For each set of decoding instructions for the reference frame, the transformation described by the set of decoding instructions is applied, using massively parallel processing, to the reference set of parameters to which the set of decoding instructions relates, to obtain a set of Gaussian parameters for each 3D Gaussian splat in a group of 3D Gaussian splats in the reference frame. The group of 3D Gaussian splats in the reference frame may contain all 3D Gaussian splats in the reference frame or all 3D Gaussian splats assigned to a particular data structure in the reference frame.

In some examples in which the encoded splat data for each frame is provided in a plurality of data structures, the transformation for each data structure belonging to the same frame may be applied using a different second processing unit. In other words, a first transformation described by a first set of decoding instructions in a first data structure in a frame may be applied using one second processing unit to obtain Gaussian parameters for one group of 3D Gaussian splats in the frame, and a second transformation described by a second set of decoding instructions in a second data structure in the same frame may be applied using another second processing unit to obtain Gaussian parameters for another group of 3D Gaussian splats in the frame.

As described above, in some examples, the at least one set of decoding instructions may provide instructions for computing a vector code book. The at least one second processing unit may be used to process the set of decoding instructions to compute the vector code book, and to process the vector code book to obtain a set of Gaussian parameters for each 3D Gaussian splat in a group of 3D Gaussian splats. The vector code book, once computed, may be stored in a memory space that is efficiently accessible by the at least one second processing unit.

In some examples, the method 600 may further comprise, for each frame, a step 640 of defining a target viewport for the frame and a step 650 of processing the set of Gaussian parameters for each 3D Gaussian splat belonging to the frame to render an image frame in the target viewport. The step of processing the set of Gaussian parameters for each 3D Gaussian splat belonging to the frame to render an image frame in the target viewport may be performed by the at least one second processing unit. As the set of Gaussian parameters for each 3D Gaussian splat in the frame is already available to the least one second processing unit (e.g. stored in the memory of the at least one second processing unit), the image frame may be rendered more efficiently.

In some examples, any data transferred from the at least one second processing unit to the at least one first processing unit is transferred such that the operation of the at least one second processing unit during performance of the method 600 is not blocked by the transfer of the data, so that the efficiency of the decoding and/or rendering is not reduced by the transfer of data from the at least one second processing unit to the at least one first processing unit. In some examples, no data is transferred from the at least one second processing unit to the at least one first processing unit. For instance, the set of Gaussian parameters for each 3D Gaussian splat in each frame may be available only to the at least one second processing unit (i.e. the at least one first processing unit only sees the reference parameters and the decoding instructions). In other examples, the set of Gaussian parameters for each 3D Gaussian splat in each frame may be transferred to the at least one first processing unit, for instance to be stored in the memory of the at least one first processing unit for transcoding or later rendering. In such a case, an asynchronous construct like a message queue may be used to avoid blocking the second processing unit.

In some examples in which the encoded splat data for each frame is provided in a plurality of data structures, the sets of Gaussian parameters for 3D Gaussian splats belonging to different data structures in the same frame may be rendered using different second processing units. Each second processing unit may output a region of the image frame in a frame buffer with at least color and density information. The regions may then be combined by a compositor to determine an output color value for each pixel in the image frame.

Further details regarding techniques for decoding and rendering 3D Gaussian splat data that is encoded using a plurality of data structures for each frame are described in Kroon, Bart and Varekamp, Christiaan (2024), "Encoding and Decoding a Representation of a 3D Scene", European Patent Application No. 24212096.2.

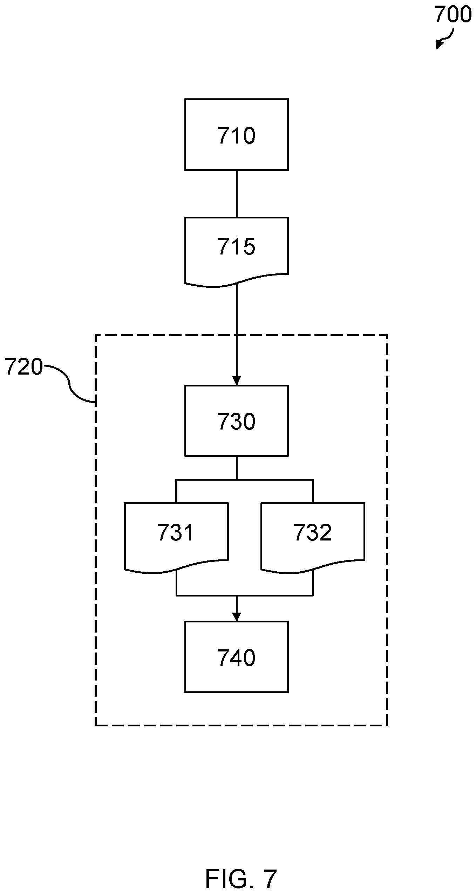

Fig. 7 illustrates a pipeline 700 for transmitting a representation of a 3D scene. The pipeline comprises an encoding apparatus 710 and a decoding apparatus 720. The encoding apparatus is configured to output a bitstream 715, which is received by the decoding apparatus. In Fig. 7, the bitstream 715 is transmitted directly from the encoding apparatus to the decoding apparatus; however, as the skilled person will readily appreciate, the bitstream may alternatively be stored on a suitable storage medium before being transmitted to the decoding apparatus.

The bitstream 715 is, itself, an embodiment of the invention. The bitstream comprises at least one reference set of parameters for a reference frame representing a 3D scene at a first moment in time, and at least one set of decoding instructions, each set of decoding instructions describing a transformation to be applied to one of the at least one reference set of parameters.

The bitstream 715 may further comprise encoded metadata. The encoded metadata may, for example, comprise information identifying each reference set of parameters. In examples in which the encoded Gaussian splat data for each frame is provided in a plurality of data structures, the metadata may comprise one or more of: the number of data structures per frame; the number of data entries in each data structure; an indication of which data structure in the reference frame each data structure in a further frame corresponds to; and/or information defining a region of the 3D scene that corresponds to a data structure.

The encoding apparatus 710 is, itself, an embodiment of the invention. The encoding apparatus may be configured to generate the bitstream 715 using the method 100 described above with reference to Fig. 1. In other words, the encoding apparatus is configured to obtain one or more frames of a 3D scene, each frame comprising a set of 3D Gaussian splats representing the 3D scene at a respective moment in time, process the one or more frames to determine at least one reference set of parameters and at least one set of decoding instructions, and encode the at least one reference set of parameters and the at least one set of decoding instructions into the bitstream 710.

The decoding apparatus 720 is, itself, an embodiment of the invention. The decoding apparatus is configured to receive and decode the bitstream 715. The decoding apparatus may be configured to decode the apparatus using the method 600 described above with reference to Fig. 6.

The decoding apparatus 720 comprises at least one first processing unit 730 and at least one second processing unit 740. Each first processing unit is configured to perform serial processing; for instance, each first processing unit may be a Central Processing Unit (CPU). In some examples, the at least one first processing unit may comprise a multi-core processor (for instance, the at least one first processing unit may be a 16-core or 32-core CPU), and may thus able to carry out a small number of parallel operations. Each second processing unit is configured to perform massively parallel processing; for instance, each second processing unit may be a Graphical Processing Unit (GPU) or a Tensor Processing Unit (TPU). In some examples, the at least one first processing unit and the at least one second processing unit may be provided in a single silicon-on-chip device.

The at least one first processing unit 730 is configured to receive the bitstream 715, and to decode the at least one reference set of parameters and the at least one set of decoding instructions 732.

In Fig. 7, the decoding apparatus 700 has a single first processing unit 730. In some examples, the decoding apparatus may comprise more than one first processing unit. In this way, in examples in which the encoded splat data for each frame is provided in a plurality of data structures, each data structure belonging to the same frame may be decoded using a different first processing unit. In some examples, the at least one first processing unit may comprise a multi-core processor and each data structure belonging to the same frame may be decoded using a different core of the multi-core processor.

The at least one second processing unit 740 is configured to receive the decoded at least one reference set of parameters 731 and the decoded at least one set of decoding instructions 732.

Having received the decoded at least one reference set of parameters 731 and the decoded at least one set of decoding instructions 732, the at least one second processing unit 740 is configured to, for each set of decoding instructions, apply the transformation described by the set of decoding instructions to the respective reference set of parameters, using massively parallel processing, to obtain a set of Gaussian parameters for each 3D Gaussian splat in a group of 3D Gaussian splats. In other words, for each transformation, the transformation is applied to each 3D Gaussian splat in the respective group in parallel.

In some examples, the at least one second processing unit may be further configured to, for each frame, define a target viewport for the frame, and to process the set of Gaussian parameters for each 3D Gaussian splat belonging to the frame to render an image frame in the target viewport.

In Fig. 7, the decoding apparatus 700 has a single second processing unit 740. In some examples, the decoding apparatus may comprise more than one second processing unit. In this way, in examples in which the encoded splat data for each frame is provided in a plurality of data structures, the transformation for each data structure belonging to the same frame may be applied using a different second processing unit, and/or sets of Gaussian parameters for 3D Gaussian splats belonging to different data structures in the same frame may be rendered using different second processing units.

Any method described herein may be computer-implemented, where computer-implemented means that the steps of said methods are performed by one or more computers and where a computer is defined as a device suitable for processing data. A computer may be suitable for processing data according to prescribed instructions.

It will be understood that, as the disclosed methods may be computer-implemented methods, there is also proposed a concept of a computer program product comprising code means for implementing any described method when said program is run on a processing system.

The skilled person would be readily capable of developing a processor for carrying out any herein described method. Thus, each step of a flow chart may represent a different action performed by a processor and may be performed by a respective module of the processing processor.

One or more steps of any of the methods described herein may be performed by one or more processors. A processor comprises an electronic circuit suitable for processing data.

As discussed above, the system makes use of processor to perform the data processing. The processor can be implemented in numerous ways, with software and/or hardware, to perform the various functions required. The processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

A single processor or other unit may fulfill the functions of several items recited in the claims.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Functions implemented by a processor may be implemented by a single processor or by multiple separate processing units which may together be considered to constitute a "processor". Such processing units may in some cases be remote from each other and communicate with each other in a wired or wireless manner.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. A method (600) for decoding a representation of a 3D scene, the method comprising:
receiving a bitstream (715) comprising encoded 3D Gaussian splat data for one or more frames (210, 220), wherein the encoded 3D Gaussian splat data comprises:
at least one reference set of parameters for a reference frame (210) representing a 3D scene at a first moment in time; and
at least one set of decoding instructions, each set of decoding instructions describing a transformation to be applied to one of the at least one reference set of parameters;
decoding, using at least one first processing unit (730), the at least one reference set of parameters and the at least one set of decoding instructions, wherein each first processing unit is configured to perform serial processing; and
for each set of decoding instructions, applying, using at least one second processing unit (740) configured to perform massively parallel processing, the transformation described by the set of decoding instructions to the respective reference set of parameters to obtain a set of Gaussian parameters for each 3D Gaussian splat in a group of 3D Gaussian splats, wherein the transformation is applied using massively parallel processing.

2. The method (600) of claim 1, wherein:
the at least one set of decoding instructions comprises at least one set of decoding instructions for a further frame (220) representing the 3D scene at a second, different moment in time; and
for each set of decoding instructions for the further frame, the step of the applying the transformation described by the set of decoding instructions comprises applying the transformation to each 3D Gaussian splat in a first group of 3D Gaussian splats in the reference frame (210) to obtain a set of Gaussian parameters for each 3D Gaussian splat in a second group of 3D Gaussian splats in the further frame.

3. The method (600) of claim 1 or 2, wherein:
the at least one set of decoding instructions comprises at least one set of decoding instructions for a third group of 3D Gaussian splats in the reference frame (210); and
for each set of decoding instructions for the reference frame, the step of the applying the transformation described by the set of decoding instructions comprises applying the transformation to the respective reference set of parameters to obtain a set of Gaussian parameters for each 3D Gaussian splat in the third group.

4. The method (600) of any of claims 1 to 3, wherein:
the encoded 3D Gaussian splat data for each frame is provided in a plurality of data structures (410, 420, 430), each data structure corresponding to a respective group of 3D Gaussian splats, wherein, for any further frame (220), each data structure in the plurality of data structures for the further frame corresponds to a respective data structure in the plurality of data structures for the reference frame (210);
any set of decoding instructions for the reference frame is provided in the same data structure as the reference set of parameters to which the transformation described by the set of decoding instructions is to be applied; and
any set of decoding instructions for any further frame is provided in a data structure corresponding to the data structure containing the reference set of parameters to which the transformation described by the set of decoding instructions is to be applied.

5. The method (600) of claim 4, wherein the step of decoding, using at least one first processing unit, the at least one reference set of parameters and the at least one set of decoding instructions comprises, for each frame, decoding each data structure (410, 420, 430) belonging to the frame using a different first processing unit.

6. The method (600) of claim 4 or 5, wherein the step of applying, using at least one second processing unit, the transformation described by each set of decoding instructions comprises, for each frame, applying the transformation described by the set of decoding instructions in each data structure (410, 420, 430) using a different second processing unit.

7. The method (600) of any of claims 4 to 6, wherein at least one data structure (410, 420, 430) corresponds to a region of a 3D scene.

8. The method (600) of any of claims 1 to 7, wherein the method further comprises, for each frame:
defining a target viewport for the frame;
processing, using the at least one second processing unit (740), the set of Gaussian parameters for each 3D Gaussian splat belonging to the frame to render an image frame in the target viewport.

9. The method (600) of any of claims 1 to 8, wherein any data that is transferred from the at least one second processing unit (740) to the at least one first processing unit (730) is transferred such that the operation of the at least one second processing unit, during performance of any step of the method of any of claims 1 to 8 that is carried out by the at least one second processing unit, is not blocked by the transfer.

10. A method (100) for encoding a representation of a 3D scene, the method comprising:
obtaining one or more frames (210, 220) of a 3D scene, each frame comprising a set of 3D Gaussian splats representing the 3D scene at a respective moment in time;
processing the one or more frames to determine:
at least one reference set of parameters for a reference frame (210) representing the 3D scene at a first moment in time; and
at least one set of decoding instructions, each set of decoding instructions describing a transformation to be applied to one of the at least one reference set of parameters;
encoding, into a bitstream (715), the at least one reference set of parameters and the at least one set of decoding instructions.

11. A computer program product comprising computer program code means which, when executed on a computing device having a processing system, cause the processing system to perform all of the steps of the method (100, 600) according to any one of claims 1 to 10.

12. A decoding apparatus (720), the decoding apparatus comprising:
at least one first processing unit (730) configured to perform serial processing, wherein the at least one first processing unit is configured to:
receive a bitstream (715) comprising encoded 3D Gaussian splat data for one or more frames (210, 220), wherein the encoded 3D Gaussian splat data comprises:
at least one reference set of parameters for a reference frame (210) representing a 3D scene at a first moment in time; and
at least one set of decoding instructions, each set of decoding instructions describing a transformation to be applied to one of the at least one reference set of parameters; and
decode the at least one reference set of parameters and the at least one set of decoding instructions; and
at least one second processing unit (740) configured to perform massively parallel processing, wherein the at least one second processing unit is configured to:
receive, from the at least one first processing unit, the decoded at least one reference set of parameters (731) and the decoded at least one set of decoding instructions (732); and
for each set of decoding instructions, apply the transformation described by the set of decoding instructions to the respective reference set of parameters to obtain a set of Gaussian parameters for each 3D Gaussian splat in a group of 3D Gaussian splats, wherein the transformation is applied using massively parallel processing.

13. The decoding apparatus (720) of claim 12, wherein the at least one first processing unit and the at least one second processing unit are provided in a single silicon-on-chip device.

14. An encoding apparatus (710), the encoding apparatus being configured to:
obtain one or more frames (210, 220) of a 3D scene, each frame comprising a set of 3D Gaussian splats representing the 3D scene at a respective moment in time;
process the one or more frames to determine:
at least one reference set of parameters for a reference frame (210) representing a 3D scene at a first moment in time; and
at least one set of decoding instructions, each set of decoding instructions describing a transformation to be applied to one of the at least one reference set of parameters;
encode, into a bitstream (715), the at least one reference set of parameters and the at least one set of decoding instructions.

15. A bitstream (715) comprising encoded 3D Gaussian splat data for one or more frames (210, 220), wherein the encoded 3D Gaussian splat data comprises:
at least one reference set of parameters for a reference frame (210) representing a 3D scene at a first moment in time; and
at least one set of decoding instructions, each set of decoding instructions describing a transformation to be applied to one of the at least one reference set of parameters.
